# EUROPÄISCHE PATENTANMELDUNG

(11) **EP 4 272 572 A1**
(43) Veröffentlichungstag der Anmeldung: **08.11.2023**
(21) Anmeldenummer: 22171881.0
(22) Anmeldetag: 05.05.2022
(51) Int. Cl.: A23L 2/84

(54) **DIREKTSAFT MIT VERRINGERTEM ZUCKERGEHALT UND HERSTELLUNGSVERFAHREN**

(71) Anmelder: Austria Juice GmbH, 3365 Allhartsberg (AT)
(72) Erfinder: HOLDENRIED, Thomas, 3300 Amstetten (AT); ZACHE, Ulrich, 55424 Münster-Sarmsheim (DE); HAPPE, Andreas, 55425 Waldalgesheim (DE); URBAN-KLIK, Manfred, 3500 Krems (AT)
(74) Vertreter: SONN Patentanwälte OG

(57) **Zusammenfassung**

Offenbart wird ein Verfahren zur Herstellung eines Direktsafts (NFC - not from concentrate) mit verringertem Zuckergehalt, bei dem der Zuckergehalt eines Direktsafts nach Zugabe von Mikroorganismen durch Fermentation verringert wird und das durch die Fermentation entstandene Ethanol mit weiteren Fermentationsprodukten vorzugsweise in einem Verdampfer abgetrennt wird, wodurch der Direktsaft mit verringertem Zuckergehalt erhalten wird. Des Weiteren offenbart wird ein Direktsaft (NFC-Saft), vorzugsweise ein Frucht-Direktsaft oder Gemüse-Direktsaft, der aus diesem Verfahren erhältlich ist.

## Beschreibung

Das Gebiet der Erfindung betrifft Verfahren zur Herstellung von Säften mit verringertem Zuckergehalt sowie die daraus erhaltenen Säfte.

Fruchtsäfte, Fruchtweine und Fruchtbrände, sowie Getränke aus diesen Lebensmitteln werden bereits seit sehr langer Zeit, teilweise seit Jahrhunderten und Jahrtausenden hergestellt. Fruchtsäfte und deren Herstellungsverfahren sind nicht nur in der EU durch Direktiven und Expertengutachten (Code of Practice der AIJN, der European Fruit Juice Association), sondern auch im internationalen Codex Alimentarius der WHO spezifiziert. Durch die natürliche Komposition der Inhaltstoffe der Früchte bzw. des aus ihnen gewonnen Saftes, die etablierten Verfahren und den erwünschten Mindesttrockensubstanzgehalt der Fruchtsäfte ergibt sich ein Zuckergehalt der Fruchtsäfte von in der Regel 5 Gew% bis 20 Gew%, je nach Fruchtart.

Direktsäfte (auch als NFC-Säfte bezeichnet, wobei "NFC" für "not from concentrate" steht - hierin werden die Begriffe "Direktsaft" und "NFC-Saft" synonym verwendet) wurden in den letzten Jahren bei den Konsumenten, für die frischer, natürlicher Geschmack eine immer größere Rolle spielt, immer beliebter, auch wenn die Kosten für NFC-Säfte aufgrund des erhöhten Transport- und Lageraufwands (im Vergleich zu Transport und Lagerung von Saftkonzentraten) mitunter deutlich höher sind.

Aufgrund des steigenden Gesundheitsbewusstseins der Konsumenten erfreuen sich auch Gemüsesäfte wachsender Beliebtheit. Eben dieses steigende Gesundheitsbewusstsein führt auch dazu, dass Getränke mit reduziertem Zuckergehalt im allgemeinen Trend liegen.

Im Stand der Technik sind Verfahren zur Verringerung des Zuckergehaltes bekannt:
Die EP 2 404 508 A1 offenbart ein Verfahren zur Verringerung des Zuckergehalts von Fruchtsäften, wobei der bei der Vergärung entstandene Alkohol durch Umkehrosmose entfernt wird. Die WO 2019/106564 A1 beschreibt ein Verfahren zur Verringerung des Zuckergehalts auf Basis von Adsorption (z.B. an Zeolith). Auch die US 5 403 604 beschäftigt sich mit derartigen Verfahren.

Die Dokumente EP 0 382 010 A1 bzw. EP 055 488 A1 beziehen sich auf Verfahren zur Verringerung des Zuckergehalts in Fruchtsäften auf der Basis von nichtfermentierenden Mikroorganismen, die keinen Alkohol bilden können, wie *Trichosporon brassicae* bzw. auf der Basis von Verfahrensbedingungen, die alkoholische Gärung vermeiden.

Das US-Patent US 4 971 813 A bezieht sich auf ein Verfahren zur Herstellung eines konzentrierten Fruchtsafts mit geringem Kaloriengehalt. Dabei werden flüchtige Aroma- bzw. Geschmacksstoffe unter Vakuum abgetrennt und gesammelt. Die nicht-flüchtige Saftfraktion wird alkoholischer Gärung mit einer Hefe unterzogen, der dadurch gebildete Alkohol wird abdestilliert. Abschließend werden die eingangs gesammelten, flüchtigen Stoffe der Saftfraktion wieder zugesetzt, um einen Getränk mit reduziertem Kaloriengehalt zu erhalten.

Schwabl et al. (Mitteilungen Klosterneuburg 70 (2020): 102-114) beschäftigt sich mit der Entwicklung und sensorischen Charakterisierung eines kalorienreduzierten Getränks auf Apfelsaftbasis. Im Zuge jener Arbeit wurde ein Verfahren zur Herstellung eines kalorienreduzierten Getränkes auf Apfelsaftbasis mittels Fermentation erprobt. Im ersten Schritt wurden die Aromen des Apfelsaftes abgedampft und kühl gelagert. In der Folge wurde das aromafreie Konzentrat vergoren. Anschließend wurden der Alkohol und die Gäraromen entfernt. Die aroma-, alkohol- und zuckerfreie Fraktion wurde mit dem ursprünglichen im ersten Behandlungsschritt konservierten Apfelaroma, Wasser und pasteurisiertem Apfelsaft mit naturbelassenem Zuckergehalt zu einem kalorienreduzierten Apfelsaftgetränk gemischt.

Die Patentschrift CH 632 137 A5 betrifft ein Verfahren zur Herstellung eines alkoholfreien Fruchtsaftgetränks mit vermindertem Kaloriengehalt sowie das aus diesem Verfahren hergestellte Fruchtsaftgetränk. Zucker wird durch Mikroorganismen oder Enzyme abgebaut, die dabei entstandenen Abbauprodukte (z.B. Alkohol) anschließend entfernt (z.B. durch Destillation).

Die US-Patentanmeldung US 2016/0165944 A1 betrifft ein Verfahren zur Verringerung des Saccharidgehalts in Saftkonzentraten. Auch bei diesem Verfahren wird der Saccharidgehalt durch alkoholische Gärung verringert, allerdings wird der Alkohol nicht abdestilliert, sondern - nachdem der Alkohol in einen Gasstrom aufgenommen wurde - durch Adsorption (z.B. an Zeolith) entfernt. In jenem Dokument wird die Entfernung des Alkohols durch Destillation als nachteilig beschrieben: Der Saccharidgehalt von Säften ist weitaus geringer als der von Saftkonzentraten, so dass dieses Verfahren für Konzentrate als Ausgangsmaterial nicht geeignet sei. Insbesondere bei Saftkonzentraten mit einem Saccharidgehalt von mehr als 20 % (w/v) könne häufig nur ein Teil der Saccharide aufgeschlossen werden, da die Verstoffwechselung der zur Fermentation eingesetzten Mikroorganismen durch eine schnell ansteigende Alkoholkonzentration stark verlangsamt und oft sogar gehemmt werde. Außerdem sei die destillative Abtrennung des entstandenen Alkohols gerade in diesem Fall besonders nachteilig, da die verbleibenden Saccharide schon bei geringer Erwärmung sogenannte Maillard-Reaktionen mit im Konzentrat vorhandenen Aminverbindungen eingingen. Maillard-Reaktionen könnten zu zahlreichen unerwünschten Verbindungen im Produkt führen. Außerdem komme es zu einer unschönen Dunkelfärbung des Konzentrats. Diese Verbindungen beeinträchtigten auch die sensorischen Eigenschaften des Konzentrats und des daraus hergestellten Saftes.

Es ist eine Aufgabe der vorliegenden Erfindung, ein verbessertes Verfahren zur Herstellung eines Saftes mit durch Fermentation verringertem Zuckergehalt zur Verfügung zu stellen. Dabei sollen Nachteile von Verfahren aus dem Stand der Technik überwunden werden. Insbesondere soll dadurch die Herstellung von zuckerreduzierten Säften ermöglicht werden, deren sensorische Eigenschaften möglichst optimal sind bzw. möglichst nahe an originalen, nicht zuckerreduzierten Säften sind. Zusätzlich oder alternativ dazu sollen die erfindungsgemäßen Verfahren bzw. Produkte großtechnisch so reibungslos bzw. mit so niedrigem Aufwand bzw. so ressourcenschonend wie möglich anwendbar bzw. verwendbar sein und/oder kompatibel zu etablierten Prozessen in der Frucht- bzw. Gemüsesaftherstellung sein.

Daher betrifft die vorliegende Erfindung ein Verfahren zur Herstellung eines Safts mit verringertem Zuckergehalt, wobei der Saft vorzugsweise ein Direktsaft (NFC-Saft), insbesondere ein Frucht-Direktsaft (NFC-Fruchtsaft) oder ein Gemüse-Direktsaft (NFC-Gemüsesaft), ist, umfassend zumindest die folgenden Schritte:
a) Bereitstellen von Direktsaft (NFC-Saft) mit einem Brixwert A und einem Zuckergehalt Z, wobei der Saft vorzugsweise ein Frucht-Direktsaft (NFC-Fruchtsaft) oder ein Gemüse-Direktsaft (NFC-Gemüsesaft) ist,
b) Entaromatisieren des Direktsafts, um eine Aromakomponente und einen entaromatisierten Saft zu erhalten, wobei der entaromatisierte Saft einen Brixwert aufweist, der weniger als 50%, bevorzugt weniger als 40% oder gar weniger als 30%, noch mehr bevorzugt weniger als 20% oder gar weniger als 15%, insbesondere weniger als 10% oder gar weniger als 5% vom Brixwert A abweicht (wobei der Brixwert A die Menge von 100% darstellt),
c) Zugabe von Mikroorganismen, die zur alkoholischen Gärung fähig sind,
d) Fermentieren des entaromatisierten Safts unter Gärbedingungen, welche die alkoholische Gärung erlauben, wodurch ein fermentiertes Erzeugnis mit einem Ethanolgehalt von zumindest 2 vol%, bevorzugt zumindest 4 vol%, mehr bevorzugt zumindest 6 vol%, noch mehr bevorzugt zumindest 8 vol%, insbesondere zumindest 10 vol%, erhalten wird und
e) Abtrennen von Ethanol und weiteren Fermentationsprodukten aus dem fermentierten Erzeugnis vorzugsweise in einem Verdampfer, insbesondere einem Fallstromverdampfer, Plattenverdampfer, Dünnschichtverdampfer oder Zentrifugalverdampfer, wodurch ein entaromatisierte Saft mit verringertem Zuckergehalt erhalten wird,
f) Rückführen der Aromakomponente in den entaromatisierten Saft mit verringertem Zuckergehalt, wodurch der Saft (Direktsaft oder NFC-Saft) mit verringertem Zuckergehalt erhalten wird.

Es ist besonders bevorzugt, wenn der verringerte Zuckergehalt des erhaltenen Saftes (Direktsaftes bzw. NFC-Saftes), der unter dem Zuckergehalt Z liegt, im Vergleich zum Zuckergehalt Z 90% oder weniger, 80% oder weniger, 70% oder weniger, 60% oder weniger, 50% oder weniger beträgt.

In einem weiteren Aspekt betrifft die vorliegende Erfindung ein Verfahren zur Herstellung eines Safts mit verringertem Zuckergehalt, wobei der Saft vorzugsweise ein Direktsaft (NFC-Saft), insbesondere ein Frucht-Direktsaft (NFC-Fruchtsaft) oder ein Gemüse-Direktsaft (NFC-Gemüsesaft), umfassend zumindest die folgenden Schritte:
- Bereitstellen eines Safts (insbesondere Direktsafts) mit verringertem Zuckergehalt, der nach dem hierin offenbarten Verfahren zur Herstellung eines Safts (inbesondere Direktsafts) mit verringertem Zuckergehalt erhalten worden ist, und
- Verdünnen (z.B. mit Wasser) und/oder Vermischen mit einem Saft (bevorzugt Direktsaft, insbesondere derselben Frucht bzw. desselben Gemüses oder gar derselben Fruchtsorte bzw. derselben Gemüsesorte), so dass der Saft (insbesondere Direktsaft) mit verringertem Zuckergehalt erhalten wird, wobei der verringerte Zuckergehalt unter dem Zuckergehalt Z (wie hierin offenbart) liegt. Vorzugsweise beträgt der verringerte Zuckergehalt im Vergleich zum Zuckergehalt Z 90% oder weniger, 80% oder weniger, 70% oder weniger, 60% oder weniger, 50% oder weniger (liegt also bei 90% von Z oder darunter, 80% von Z oder darunter, 70% von Z oder darunter, usw.).

In noch einem weiteren Aspekt betrifft die vorliegende Erfindung einen Saft, wobei der Saft vorzugsweise ein Direktsaft (NFC-Saft), insbesondere ein Frucht-Direktsaft (NFC-Fruchtsaft) oder ein Gemüse-Direktsaft (NFC-Gemüsesaft), ist erhältlich gemäß dem hierin offenbarten Verfahren.

In einem letzten Aspekt betrifft die vorliegende Erfindung einen Saft mit verringertem Zuckergehalt, wobei der Saft vorzugsweise ein Direktsaft (NFC-Saft), insbesondere ein Frucht-Direktsaft (NFC-Fruchtsaft) oder ein Gemüse-Direktsaft (NFC-Gemüsesaft), ist, wobei der Saft ausgewählt ist aus:
(sortenreinem) (NFC-)Apfelsaft mit einem Zuckergehalt von höchstens 70,2 g/L, bevorzugt höchstens 62,4 g/L, insbesondere höchstens 54,6 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) (NFC-)Orangensaft mit einem Zuckergehalt von höchstens 61,2 g/L, bevorzugt höchstens 54,4 g/L, insbesondere höchstens 47,6 g/L, einem Kaliumgehalt von 1300 mg/L - 2500 mg/L, bevorzugt 1500 mg/L -2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) (NFC-)Ananassaft mit einem Zuckergehalt von höchstens 75,6 g/L, bevorzugt höchstens 67,2 g/L, insbesondere höchstens 58,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) (NFC-)Bananensaft mit einem Zuckergehalt von höchstens 136,8 g/L, bevorzugt höchstens 121,6 g/L, insbesondere höchstens 106,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) (NFC-)Birnensaft mit einem Zuckergehalt von höchstens 70,2 g/L, bevorzugt höchstens 62,4 g/L, insbesondere höchstens 54,6 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) (NFC-)Kiwisaft mit einem Zuckergehalt von höchstens 55,8 g/L, bevorzugt höchstens 49,6 g/L, insbesondere höchstens 43,4 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
(sortenreinem) (NFC-)Weintraubensaft mit einem Zuckergehalt von höchstens 99 g/L, bevorzugt höchstens 88 g/L, insbesondere höchstens 77 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L.

Mit den hierin offenbarten erfindungsgemäßen Verfahren können erstmals die hierin offenbarten, erfindungsgemäßen Produkte hergestellt werden, die trotz verringertem Zuckergehalt hervorragende sensorische Eigenschaften aufweisen. Insbesondere bleibt die Direktsaft- bzw. NFC-Qualität der Säfte erhalten, typischerweise auch weil z.B. durch Verdampfung abgetrenntes Wasser im Prozess wieder rückgeführt wird. Auch der durch das erfindungsgemäße Verfahren erzielte Glyceringehalt hat (auch durch den leicht süßlichen Geschmack des Glycerins) einen gewissen förderlichen Einfluss auf das Geschmacksbild, vor allem hinsichtlich des Mundgefühls.

Die folgende detaillierte Beschreibung betrifft die Verfahren und Produkte (d.h. Säfte) gleichermaßen, z.B. bevorzugte Verfahrensmerkmale entsprechen auch Eigenschaften oder Eignungen der Produkte bzw. ihrer entsprechenden Inhaltsstoffe und bevorzugte Produktmerkmale entsprechen auch Mitteln, die im erfindungsgemäßen Verfahren eingesetzt werden. Alle vorzugsweisen Merkmale sind miteinander kombinierbar, es sei denn dies wurde explizit ausgeschlossen. Alle Verfahrensmerkmale, inklusive die der oben genannten, sind miteinander kombinierbar. Alle Produktmerkmale, inklusive die der oben genannten, sind miteinander kombinierbar.

Im Lichte der vorliegenden Offenbarung ist für den Fachmann evident, dass die Reihenfolge der Schritte der erfindungsgemäßen Verfahren (insbesondere der Schritte a) - f) beliebig gewählt werden kann bzw. Schritte gleichzeitig ausgeführt werden können, insoweit dies technisch zweckmäßig ist. Bevorzugt ist die Durchführung der Schritte in der alphabetischen Reihenfolge a) - f), allenfalls mit gleichzeitiger Durchführung aufeinander folgender Schritte, insoweit dies technisch sinnvoll ist.

In Schritt a) des erfindungsgemäßen Verfahrens zur Herstellung eines Safts mit verringertem Zuckergehalt wird Direktsaft (NFC-Saft) mit einem Brixwert A und einem Zuckergehalt Z bereitgestellt. Dieser Saft ist vorzugsweise ein NFC-Fruchtsaft oder ein NFC-Gemüsesaft. Insbesondere ist der Fruchtsaft NFC-Apfelsaft oder NFC-Orangensaft, bevorzugt mit einem der folgenden Brixwerte A und/oder einem der folgenden Zuckergehalte Z:

| | Brixwert A | Zuckergehalt Z |
|---|---|---|
| Apfelsaft (NFC/Direktsaft) | ≥ 10,0° | ca. 10 Gew% |
| Orangensaft (NFC/Direktsaft) | ≥ 10,0° | ca. 8,0-8,5 Gew% |

In einer bevorzugten Ausführungsform weist der Direktsaft (insbesondere der NFC-Fruchtsaft oder NFC-Gemüsesaft) einen Brixwert A von mindestens 5°, bevorzugt mindestens 10° auf, oder von 4°-30°, bevorzugt von 10°-25°.

In einer weiteren bevorzugten Ausführungsform ist der bereitgestellte (und typischerweise auch der hergestellte) Saft ein Direktsaft, insbesondere ein Frucht-Direktsaft, bevorzugt ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft, insbesondere ausgewählt aus Apfelsaft, Birnensaft und Orangensaft, oder ein Gemüse-Direktsaft, bevorzugt ausgewählt aus Karottensaft und Rote-Bete-Saft.

In den Schritten b) und c) des erfindungsgemäßen Herstellungsverfahrens wird der Saft, um eine Aromakomponente und einen entaromatisierten Saft zu erhalten. Dieser Schritte kann in dafür geeigneten Verdampfern (unter Vakuum) durchgeführt werden. Es ist aus Qualitätsgründen darauf zu achten, dass die Aufkonzentration, die mit diesem Schritt einhergehen kann, nicht zu stark ist. Daher weist der entaromatisierte Saft einen Brixwert auf, der weniger als 50%, bevorzugt weniger als 40% oder gar weniger als 30%, noch mehr bevorzugt weniger als 20% oder gar weniger als 15%, insbesondere weniger als 10% oder gar weniger als 5% vom Brixwert A abweicht.

Das Abtrennen der Aromakomponente bringt den Vorteil mit sich, dass die empfindlicheren Geschmacks- und Aromastoffe durch die Fermentation bzw. die weiteren Verfahrensschritte nicht beeinträchtigt werden (wodurch es zu Geschmacksverlust oder Geschmacksverfälschungen im Produkt kommen würde). Für den Fachmann ist jedoch evident, dass dieser Entaromatisierungsschritt nicht vollständig (d.h. so dass überhaupt keine Aroma- oder Geschmacksstoffe mehr im entaromatisierten Saft verbleiben) ablaufen kann. Die Aromakomponente kann sich aus mehreren Fraktionen zusammen setzen, die getrennt voneinander (gekühlt) gelagert werden.

In Schritt c) des erfindungsgemäßen Verfahrens werden Mikroorganismen, die zur alkoholischen Gärung fähig sind, zugegeben. In einer bevorzugten Ausführungsform umfassen die Mikroorganismen zumindest Hefe der Gattung *Saccharomyces,* vorzugsweise *Saccharomyces cerevisiae,* insbesondere *Saccharomyces cerevisiae* var. cerevisiae oder *Saccharomyces cerevisiae* var. bayanus. Es ist besonders bevorzugt, (ausschließlich) Reinzuchthefen zuzugeben, um das Risiko möglichst zu minimieren, dass während der Gärung Nebenprodukte entstehen, die einen unerwünschten Beigeschmack ("Off-Flavour") im Endprodukt verursachen.

Zweckmäßigerweise werden auch Nährstoffe für die Mikroorganismen zugegeben, um die Fermentation möglichst reibungslos ablaufen zu lassen. Unter den Begriff "Nährstoffe", wie hierin verwendet, fallen auch Mineralstoffe und Vitamine. Als Nährstoffe besonders bevorzugt sind Phosphatsalz (z.B. Ammoniumphosphat) und/oder Thiamin.

Bei der Zugabe der Nährstoffe ist darauf Bedacht zu nehmen, dass der Geschmack des Endprodukts möglichst nicht verfälscht werden soll, d.h. die zugegebene Menge sollte vorzugsweise so gering wie möglich sein und dennoch eine reibungslose Fermentation (d.h. einen vollständigen Ablauf der Fermentation) ermöglichen. In einer bevorzugten Ausführungsform wird vor dem Fermentieren nur so viel Phosphat(salz) hinzugegeben, dass die Phosphatkonzentration im fermentierten Erzeugnis nach dem Entfernen von zumindest einem Teil der Mikroorganismen nicht über 150%, bevorzugt nicht über 140%, mehr bevorzugt nicht über 130%, noch mehr bevorzugt nicht über 120%, insbesondere nicht über 110% oder nicht über 105% der Phosphatkonzentration im entaromatisierten Saft (erhalten mit Schritt b) liegt.

In Schritt d) des erfindungsgemäßen Verfahrens wird der entaromatisierte Saft unter Gärbedingungen, welche die alkoholische Gärung erlauben, fermentiert. Diese Gärbedingungen umfassen vorzugsweise eine Gärtemperatur zwischen 15° und 35°C, bevorzugt 15°C bis 25°C, insbesondere zwischen 20°C bis 25°C. Die Fermentation wird bevorzugt für 5-15 Tage durchgeführt.

Zweckmäßigerweise wird eine Inkubation unter Belüftung (d.h. aerob) vorgeschaltet, um die nachfolgende Fermentation möglichst reibungslos ablaufen zu lassen. Erst danach wird Schritt d) durchgeführt, vorzugsweise durchgehend unter anaeroben Bedingungen.

Durch Schritt d) wird ein fermentiertes Erzeugnis mit einem Ethanolgehalt von zumindest 2 vol%, bevorzugt zumindest 4 vol%, mehr bevorzugt zumindest 6 vol%, noch mehr bevorzugt zumindest 8 vol%, insbesondere zumindest 10 vol%, erhalten. Üblicherweise wird ein Ethanolgehalt von 15 vol% nicht wesentlich überschritten.

Zweckmäßigerweise wird nach Schritt d) zumindest ein Teil der Mikroorganismen entfernt, vorzugsweise ist zu diesem Zweck ein Filtrationsschritt nachgeschaltet.

In einer besonders bevorzugten Ausführungsform wird (insbesondere zwischen den Schritten d) und e) ein Stabilisierungsschritt durchgeführt. Dabei werden Stabilisierungsmittel bzw. Schönungsmittel (wie z.B. Bentonit, Aktivkohle, Kieselsol und/oder Proteine, beispielsweise Protein aus Erbsen oder anderen Hülsenfrüchten oder Kartoffeln) zugegeben. Zweckmäßigerweise ist diesem Stabilisierungsschritt ein Filtrationsschritt (zur Entfernung der Stabilisierungsmittel bzw. Schönungsmittel) nachgeschaltet.

In Schritt e) des erfindungsgemäßen Verfahrens werden nun Ethanol und weitere Fermentationsprodukte (wie Essigsäure, Ethylacetat, Acetaldehyd, Frucht-Ester und/oder Fuselöle; insbesondere Essigsäure) aus dem fermentierten Erzeugnis vorzugsweise in einem Verdampfer abgetrennt. Dadurch wird ein entaromatisierter Saft mit verringertem Zuckergehalt erhalten. Bevorzugte Parameter sind beispielsweise 40-115 °C und Unterdruck (0-900 mbar).

Für den Fachmann ist evident, dass dieser Abtrennungsschritt nicht vollständig (d.h. so dass überhaupt kein Alkohol sowie überhaupt keine Fermentationsprodukte im Saftkonzentrat verbleiben) ablaufen kann. Ein gewisser, geringer Alkoholanteil kann in Frucht- und Gemüsesäften toleriert werden.

Geeignete Verdampfer sind dem Fachmann im Lichte dieser Beschreibung bekannt. Geeignete Verdampfer sind beispielsweise in Cyklis 2022 (Journal of Food Engineering 317 (2022): 110884.), Adnan & Mushtaq 2018 (in: Fruit Juices. Academic Press, 2018. 217-240.) und US 4 971 813 A offenbart.

Als Verdampfer werden bevorzugt Fallstromverdampfer, Plattenverdampfer, Dünnschichtverdampfer oder Zentrifugalverdampfer eingesetzt.

In einer bevorzugten Ausführungsform ist der Verdampfer mit einer Vakuumpumpe ausgestattet, um zusätzlich Unterdruck zu erzeugen.

In einer weiteren bevorzugten Ausführungsform erfolgt das Abtrennen von Ethanol in Schritt e) in einem mehrstufigen Verdampfer bei stufenweiser Absenkung der Temperatur. Dadurch wird möglichst schonend vorgegangen und die sensorischen Eigenschaften des Endprodukts werden verbessert.

In Schritt f) des erfindungsgemäßen Verfahrens wird die Aromakomponente in den entaromatisierten Saft mit verringertem Zuckergehalt rückgeführt, wodurch der Direktsaft mit verringertem Zuckergehalt erhalten wird. Dieser Direktsaft weist (gegebenenfalls nach dem Vermischen mit einem weiteren Direktsaft) vorzugsweise einen Brixwert auf, der weniger als 50%, bevorzugt weniger als 40% oder gar weniger als 30%, noch mehr bevorzugt weniger als 20% oder gar weniger als 15%, insbesondere weniger als 10% oder gar weniger als 5% vom Brixwert A abweicht (wobei der Brixwert A die Menge von 100% darstellt).

Auch aus ökologischen (d.h. ressourcenschonenden) Gesichtspunkten ist es von Vorteil, wenn das erfindungsgemäße Verfahren unter zumindest teilweiser Rückführung des im Verfahren (insbesondere in den Schritten b) und/oder e) abgetrennten Wassers durchgeführt wird (so dass dieses rückgeführte Wasser im letztlich erhaltenen Saft mit verringerten Zuckergehalt vorhanden ist). Es ist besonders bevorzugt, wenn zumindest 50%, bevorzugt zumindest 60%, mehr bevorzugt zumindest 70%, noch mehr bevorzugt zumindest 80%, inbesondere zumindest 90% des im Verfahren abgetrennten (abgedampften) Wassers rückgeführt wird.

Aus denselben Gründen wird in einer bevorzugten Ausführungsform Schritt b) und/oder e) in einem Verdampfer, insbesondere einem Fallstromverdampfer, Plattenverdampfer, Dünnschichtverdampfer oder Zentrifugalverdampfer, unter zumindest teilweiser Rückführung der Brüdenwassers durchgeführt. Es ist besonders bevorzugt, wenn zumindest 50%, bevorzugt zumindest 60%, mehr bevorzugt zumindest 70%, noch mehr bevorzugt zumindest 80%, inbesondere zumindest 90% des Brüdenwassers rückgeführt wird.

Wie sich herausgestellt hat, werden hervorragende Ergebnisse im Sinne der vorliegenden Erfindung (vor allem auch in sensorischer Hinsicht) erzielt, wenn Schritt b) und/oder e) in einer Schleuderkegelkolonne ("spinning cone column", SCC) durchgeführt wird. Die Verwendung von Schleuderkegelkolonnen ist in der Herstellung von entalkoholisiertem Wein etabliert. Weitere Details zu Schleuderkegelkolonnen und ihrer Verwendung sind beispielsweise offenbart in: Belisario-Sanchez, Yulissa Y., et al. "Dealcoholized wines by spinning cone column distillation: phenolic compounds and antioxidant activity measured by the 1, 1-diphenyl-2-picrylhydrazyl method." Journal of Agricultural and Food Chemistry 57.15 (2009): 6770-6778; Belisario-Sánchez, Yulissa Y., et al. "Aroma recovery in wine dealcoholization by SCC distillation." Food and Bioprocess Technology 5.6 (2012): 2529-2539.; oder Saha, Bithika, et al. "Review of processing technology to reduce alcohol levels in wines." 1st International Symposium Alcohol level reduction in wine-Oenoviti International Network. France. 2013.

Der Brixwert (°Brix) bezieht sich auf eine Einheit, die den Gehalt an löslichen Feststoffen in einer Lösung angibt. Ein Grad Brix entspricht 1 Gramm Saccharose in 100 Gramm Saccharose-Wasser-Lösung und stellt somit die Konzentration der löslichen Feststoffe in der Lösung in Gewichtsprozent (% w/w) dar. Eine Lösung hat einen Brixwert von 1°, wenn die Dichte dieser Lösung die gleiche ist wie die einer Lösung von 1 Gramm Saccharose in 100 Gramm Saccharose/Wasser-Lösung (bei 20°C und Normaldruck). Der Brixwert wird üblicherweise mit einem Refraktometer gemessen.

Im Folgenden wird die Erfindung anhand von bevorzugten, nicht einschränkenden Beispielen und Zeichnungen näher erläutert.

**Fig. 1** zeigt eine Ausführungsform des erfindungsgemäßen Verfahrens zur Herstellung eines Safts mit verringertem Zuckergehalt. Abkürzungen: BX - Brix, ABV -Ethanolgehalt (vol%).

**Fig. 2** zeigt eine weitere Ausführungsform dieses Verfahrens. Abkürzungen: BX - Brix, ABV - Ethanolgehalt (vol%); tw - teilweise.

### Beispiel 1

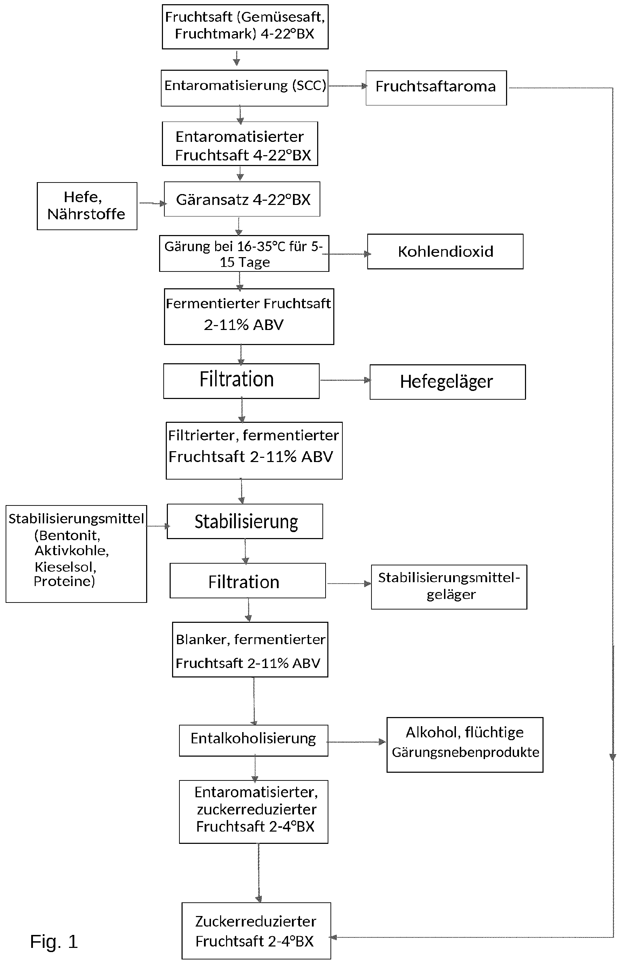

Eine Ausführungsform des erfindungsgemäßen Verfahrens zur Herstellung eines Safts mit verringertem Zuckergehalt wird in Figur 1 gezeigt. Ein NFC-Fruchtsaft (z.B. NFC-Apfel- oder NFC-Orangensaft), oder wahlweise ein Gemüsesaft oder ein Fruchtmark, mit einem Brixwert zwischen 4° bis 22° und einem Zuckergehalt Z wird in einer Schleuderkegelkolonne (englisch: Spinning Cone Column, kurz SCC) entaromatisiert. Das dabei abgetrennte Saftaroma (d. h. Fruchtsaftaroma oder Gemüsesaftaroma) wird später im Prozess wieder zugeführt. Danach werden Mikroorganismen (z.B. *Saccharomyces cerevisiae* var. bayanus), Nährstoffe für die Mikroorganismen und Wasser (zur Rückverdünnung) zugeführt, um einen Gäransatz mit einem Brixwert von 4° bis 22° zu erhalten. Die Gärung wird bei 16-35 °C für 5-15 Tage durchgeführt, um einen fermentierten Saft mit 2-11 vol% Ethanol zu gewinnen. Das Filtrat wird mit Stabilisierungsmittel wie Bentonit, Aktivkohle, Kieselsol und/oder Proteinen (z.B. Protein aus Erbsen oder anderen Hülsenfrüchten oder Kartoffeln) stabilisiert und ein weiteres Mal filtriert. Vom daraus wiederum erhaltenen Filtrat (blanker, fermentierter Frucht- oder Gemüsesaft mit 2-11 vol% Ethanol) wird der Alkohol z.B. in einem Verdampfer (z.B. einem Fallstromverdampfer, Plattenverdampfer, Dünnschichtverdampfer oder Zentrifugalverdampfer) bei 40-115 °C und Unterdruck oder in einer SCC abgetrennt, gegebenenfalls unter Rückführung des Brüdenwassers. Zuletzt wird die zuvor abgetrennte Aromakomponente hinzugefügt, um einen zuckerreduzierten (NFC-)Fruchtsaft mit 2-4° Brixwert zu erhalten. Dieser wird nun mit nicht-zuckerreduziertem, sortengleichem (NFC)-Saft auf Trinkstärke im gewünschten Verhältnis rückverschnitten, sodass eine bestimmte Zuckerreduktion von 10% bis 50% im Vergleich zum Zuckergehalt Z erzielt wird.

### Beispiel 2

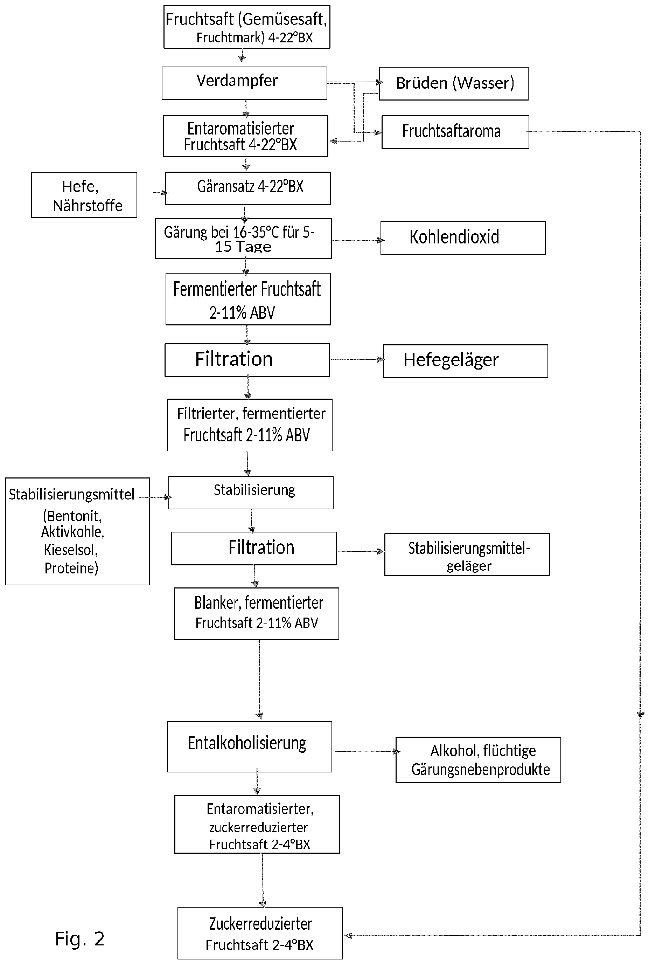

Eine weitere Ausführungsform des erfindungsgemäßen Verfahrens zur Herstellung eines Safts mit verringertem Zuckergehalt wird in Figur 2 gezeigt. Hier wird wie in Beispiel 1 vorgegangen, die Entaromatisierung findet jedoch in einem Verdampfer (z.B. einem Fallstromverdampfer, Plattenverdampfer, Dünnschichtverdampfer oder Zentrifugalverdampfer) unter Rückführung des Brüdenwassers statt.

## Patentansprüche

1. Verfahren zur Herstellung eines Direktsafts mit verringertem Zuckergehalt, wobei der Direktsaft vorzugsweise ein Frucht-Direktsaft oder ein Gemüse-Direktsaft ist, umfassend zumindest die folgenden Schritte:
a) Bereitstellen von Direktsaft mit einem Brixwert A und einem Zuckergehalt Z, wobei der Saft vorzugsweise ein Frucht-Direktsaft oder ein Gemüse-Direktsaft ist,
b) Entaromatisieren des Direktsafts, um eine Aromakomponente und einen entaromatisierten Saft zu erhalten, wobei der entaromatisierte Saft einen Brixwert aufweist, der weniger als 50%, bevorzugt weniger als 40% oder gar weniger als 30%, noch mehr bevorzugt weniger als 20% oder gar weniger als 15%, insbesondere weniger als 10% oder gar weniger als 5% vom Brixwert A abweicht,
c) Zugabe von Mikroorganismen, die zur alkoholischen Gärung fähig sind,
d) Fermentieren des entaromatisierten Safts unter Gärbedingungen, welche die alkoholische Gärung erlauben, wodurch ein fermentiertes Erzeugnis mit einem Ethanolgehalt von zumindest 2 vol%, bevorzugt zumindest 4 vol%, mehr bevorzugt zumindest 6 vol%, noch mehr bevorzugt zumindest 8 vol%, insbesondere zumindest 10 vol%, erhalten wird und
e) Abtrennen von Ethanol und weiteren Fermentationsprodukten aus dem fermentierten Erzeugnis vorzugsweise in einem Verdampfer, insbesondere einem Fallstromverdampfer, Plattenverdampfer, Dünnschichtverdampfer oder Zentrifugalverdampfer, wodurch ein entaromatisierte Saft mit verringertem Zuckergehalt erhalten wird,
f) Rückführen der Aromakomponente in den entaromatisierten Saft mit verringertem Zuckergehalt, wodurch der Direktsaft mit verringertem Zuckergehalt erhalten wird.

2. Verfahren nach Anspruch 1, wobei das Verfahren unter zumindest teilweiser Rückführung des im Verfahren abgetrennten Wassers durchgeführt wird.

3. Verfahren nach Anspruch 1 oder 2, wobei Schritt b) und/oder e) in einer Schleuderkegelkolonne durchgeführt wird.

4. Verfahren nach einem der Ansprüche 1 bis 3, wobei Schritt b) und/oder e) in einem Verdampfer, insbesondere einem Fallstromverdampfer, Plattenverdampfer, Dünnschichtverdampfer oder Zentrifugalverdampfer, unter zumindest teilweiser Rückführung der Brüdenwassers durchgeführt wird.

5. Verfahren zur Herstellung eines Direktsafts mit verringertem Zuckergehalt, wobei der Direktsaft vorzugsweise ein Frucht-Direktsaft oder ein Gemüse-Direktsaft ist, umfassend zumindest die folgenden Schritte:
- Bereitstellen eines Direktsafts mit verringertem Zuckergehalt, der nach dem Verfahren gemäß einem der Ansprüche 1 bis 4 erhalten worden ist, und
- Verdünnen und/oder Vermischen mit einem weiteren Direktsaft, so dass der Direktsaft mit verringertem Zuckergehalt erhalten wird, wobei der verringerte Zuckergehalt unter dem Zuckergehalt Z liegt, vorzugsweise wobei der verringerte Zuckergehalt im Vergleich zum Zuckergehalt Z 90% oder weniger, 80% oder weniger, 70% oder weniger, 60% oder weniger, 50% oder weniger beträgt.

6. Verfahren nach einem der Ansprüche 1 bis 5, wobei die weiteren Fermentationsprodukte in Schritt e) aus der Gruppe bestehend aus Essigsäure, Ethylacetat, Acetaldehyd, Frucht-Estern und Fuselölen ausgewählt sind.

7. Verfahren nach einem der Ansprüche 1 bis 6, wobei das Abtrennen von Ethanol in Schritt e) in einem mehrstufigen Verdampfer bei stufenweiser Absenkung der Temperatur erfolgt.

8. Verfahren nach einem der Ansprüche 1 bis 7, wobei die Gärbedingungen in Schritt d) eine Gärtemperatur zwischen 15° und 35°C, bevorzugt 15°C bis 25°C, insbesondere zwischen 20°C bis 25°C, umfassen.

9. Verfahren nach einem der Ansprüche 1 bis 8, wobei die Mikroorganismen in Schritt c) zumindest Hefe der Gattung *Saccharomyces*, vorzugsweise *Saccharomyces cerevisiae,* insbesondere *Saccharomyces cerevisiae* var. cerevisiae oder *Saccharomyces cerevisiae* var. bayanus, umfassen.

10. Verfahren noch einem der Ansprüche 1 bis 9, wobei nach Schritt d) zumindest ein Teil der Mikroorganismen entfernt wird, vorzugsweise durch Filtration.

11. Verfahren nach einem der Ansprüche 1 bis 10, wobei vor Schritt e) Stabilisierungsmittel wie Bentonit, Aktivkohle und/oder Proteine zugegeben wird, vorzugsweise wobei diese Zugabe nach Schritt d) erfolgt.

12. Verfahren nach einem der Ansprüche 1 bis 11, wobei der Direktsaft ein Frucht-Direktsaft ist, ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft, insbesondere ausgewählt aus Apfelsaft, Birnensaft und Orangensaft; oder wobei der Direktsaft ein Gemüse-Direktsaft ist, ausgewählt aus Karottensaft und Rote-Bete-Saft.

13. Direktsaft, vorzugsweise Frucht-Direktsaft oder Gemüse-Direktsaft, erhältlich nach dem Verfahren nach einem der Ansprüche 1 bis 12.

14. Direktsaft mit verringertem Zuckergehalt, wobei der Direktsaft ausgewählt ist aus:
Apfelsaft mit einem Zuckergehalt von höchstens 70,2 g/L, bevorzugt höchstens 62,4 g/L, insbesondere höchstens 54,6 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Orangensaft mit einem Zuckergehalt von höchstens 61,2 g/L, bevorzugt höchstens 54,4 g/L, insbesondere höchstens 47,6 g/L, einem Kaliumgehalt von 1300 mg/L - 2500 mg/L, bevorzugt 1500 mg/L -2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Ananassaft mit einem Zuckergehalt von höchstens 75,6 g/L, bevorzugt höchstens 67,2 g/L, insbesondere höchstens 58,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Bananensaft mit einem Zuckergehalt von höchstens 136,8 g/L, bevorzugt höchstens 121,6 g/L, insbesondere höchstens 106,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Birnensaft mit einem Zuckergehalt von höchstens 70,2 g/L, bevorzugt höchstens 62,4 g/L, insbesondere höchstens 54,6 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Kiwisaft mit einem Zuckergehalt von höchstens 55,8 g/L, bevorzugt höchstens 49,6 g/L, insbesondere höchstens 43,4 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
Weintraubensaft mit einem Zuckergehalt von höchstens 99 g/L, bevorzugt höchstens 88 g/L, insbesondere höchstens 77 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L; vorzugsweise wobei der Direktsaft erhältlich nach dem Verfahren gemäß einem der Ansprüche 1 bis 12 ist.
